## Europäisches Patentamt

## European Patent Office

## Office européen des brevets

(11) Veröffentlichungsnummer: **0 214 584**
**A2**

# (12) EUROPÄISCHE PATENTANMELDUNG

(21) Anmeldenummer: **86112038.4**

(22) Anmeldetag: **30.08.86**

(51) Int. Cl.⁴: **B 23 Q 35/121**

(30) Priorität: **12.09.85 CH 3958/85**

(43) Veröffentlichungstag der Anmeldung:
**18.03.87 Patentblatt 87/12**

(84) Benannte Vertragsstaaten:
**CH DE FR GB IT LI NL**

(71) Anmelder: **Starrfräsmaschinen AG**

**CH-9400 Rorschacherberg(CH)**

(72) Erfinder: **Adler, Joachim**
**Ramsenstrasse 2e**
**CH-9014 St-Gallen(CH)**

(72) Erfinder: **Reithofer, Klaus**
**Erlenstrasse 11a**
**CH-9400 Rorschacherberg(CH)**

(72) Erfinder: **Gähler, Max**
**Wiggenrainstrasse 18b**
**CH-9400 Rorschacherberg(CH)**

(74) Vertreter: **EGLI-EUROPEAN PATENT ATTORNEYS**
**Horneggstrasse 4**
**CH-8008 Zürich(CH)**

(54) Verfahren und Kopiereinrichtung zur digitalen Steuerung einer Werkzeugmaschine.

(57) Die Kopiereinrichtung wird in Kopierfräsmaschinen verwendet, mit denen Werkstücke hergestellt werden, deren Form durch Abtasten eines Modelles mit einem einen Fühler aufweisenden Tastkopf und durch Verarbeiten der vom Fühler erzeugten Signale in einem Prozessor zum Steuern der Stellmotoren der Kopierfräsmaschine hergestellt wird. Im Gegensatz zu bekannten Kopierfräsmaschinen kann der Sollwert der Tasterauslenkung des Fühlers sowohl in radialer als auch in axialer Fühlerrichtung unterschiedlich eingestellt und in Abhängigkeit von Auslenkrichtung und Vorschubrichtung variiert werden. Dadurch können die bei der Bearbeitung am Fräser entstehenden Abweichungen kompensiert werden. Da zudem der Anpressdruck des Tasters am Modell einstellbar ist, können Beschädigungen am Modell durch wiederholte Abtastung des Modelles weitgehend vermieden werden. Mit dem zusätzlich in Bewegungsrichtung vorgesteuerten Taster werden auch die in bekannten Kopiersystemen auftretenden Kopierfehler an unstetigen Modellübergängen vermieden.

Verfahren und Kopiereinrichtung zur digitalen Steuerung
einer Werkzeugmaschine

---

Die Erfindung betrifft ein Verfahren zur digitalen
Steuerung einer Werkzeugmaschine, insbesondere einer
Kopierfräsmaschine, bei welchem ein Modell mit einem
Tastkopf abgetastet wird und die von diesem Tastkopf
erzeugten Signale einem Prozessor übermittelt werden,
durch welchen die Signale verarbeitet, verstärkt und zur
Steuerung der Stellmotore der Werkzeugmaschine eingesetzt
werden und mit welchem ein dem Modell entsprechendes
Werkstück hergestellt wird, wobei ein im Tastkopf
mechanisch zentrierter Taster bei Berührung mit dem
Modell annähernd senkrecht zur Modelloberfläche um einen
bestimmten Betrag ausgelenkt wird und hierbei die in den
Richtungen der drei Maschinenachsen erzeugten, zur
Auslenkung des Tasters proportionalen Signale dem
Prozessor übermittelt werden sowie das Modell in
vorgewählten Bahnen mit dieser Auslenkung als Sollwert
abgefahren wird.

Die spanende Bearbeitung von Werkstücken mit
komplizierter Raumform durch Kopierfräsmaschinen ist seit
langem bekannt. Hierbei wird mittels eines mit einem Taster ausgerüsteten Fühler ein Modell mechanisch abgetastet. Aus der Auslenkung des Tasters werden der Grösse der Auslenkung entsprechende Signale gebildet und verstärkt, aus denen von einer Kopierregelungsvorrichtung die Vorschubsignale für die Stellantriebe der Kopierfräsmaschine abgeleitet werden.

Während früher ausschliesslich analoge Kopiersteuerungen verwendet wurden, werden diese mehr und mehr durch digitale Kopiersteuerungen verdrängt, da dadurch die beim Kopierfräsen auftretende relativ langen Bearbeitungszeiten verringert werden können, was eine entsprechende Steigerung der Produktivität bei diesen Maschinen bedeutet. Allerdings treten wegen der grösseren Vorschubgeschwindigkeiten zusätzliche Probleme auf. Von besonderer Bedeutung ist hierbei, dass mit dem Taster grössere Sollauslenkungen erreicht werden können, um damit zur Vermeidung einer zu grossen Reglerverstärkung über einen grösseren Nachlauf oder Schleppabstand zu verfügen.

Diese hier kurz angedeuteten Probleme sind bekannt und es wird hierzu auf die Veröffentlichungen "S. Schreiber, U. Brüggemann, Gestaltung eines Kopierfühlers mit grossem Auslenkbereich" und "R. Wollenberg, R. Milnikel, Verbesserung des Uebertragungsverhaltens von Kopierfühlern mit Hilfe des Mikrorechners" in der Zeitschrift "Industrieanzeiger Nr. 58 vom 19.7.1985" verwiesen.

Die Erfindung bezieht sich ebenfalls auf das Gebiet der digitalen Kopiersysteme, die bei Kopierfräsmaschinen für hohe Bahngeschwindigkeiten eingesetzt werden können.

Der Erfindung liegt die Aufgabe zugrunde, das Verfahren
der eingangs beschriebenen Art so auszugestalten, dass
die Formgenauigkeit des Werkstückes gegenüber dem Modell
verbessert wird, ohne jedoch eine Einschränkung bezüglich
der Vorschubgeschwindigkeit hinnehmen zu müssen.

Diese Aufgabe wird gemäss der Erfindung dadurch gelöst,
dass der Sollwert der Auslenkung des Tasters und der
Vorschub auf vorgewählten Bahnen durch entsprechende
Programmierung des Prozessors derart unterschiedlich
eingestellt wird, dass dadurch die von der
Fräserbeanspruchung herrührenden, bei der Bearbeitung
entstehenden Abweichungen weitgehend kompensiert werden.

Eine weitere Verbesserung der Formgenauigkeit des
Werkstückes gegenüber dem Modell kann dadurch erreicht
werden, dass der Taster zusätzlich zur Auslenkung
senkrecht zur Modelloberfläche um einen vorbestimmten
Betrag gegenüber seiner zentrierten Lage in
Bewegungsrichtung des Tastkopfes tangential vorgesteuert
ausgelenkt wird.

Die Erfindung umfasst auch eine Kopiereinrichtung, mit
welcher das erfindungsgemässe Verfahren optimal
ausgeführt werden kann. Diese Aufgabe wird gemäss der
Erfindung dadurch gelöst, dass der Tastkopf mit Mitteln
zur unterschiedlichen Einstellung des Sollwertes der
Tasterauslenkung und mit einer Einrichtung versehen ist,
durch welche der Anpressdruck, mit welchem der Taster auf
das Modell drückt, einstellbar ist.

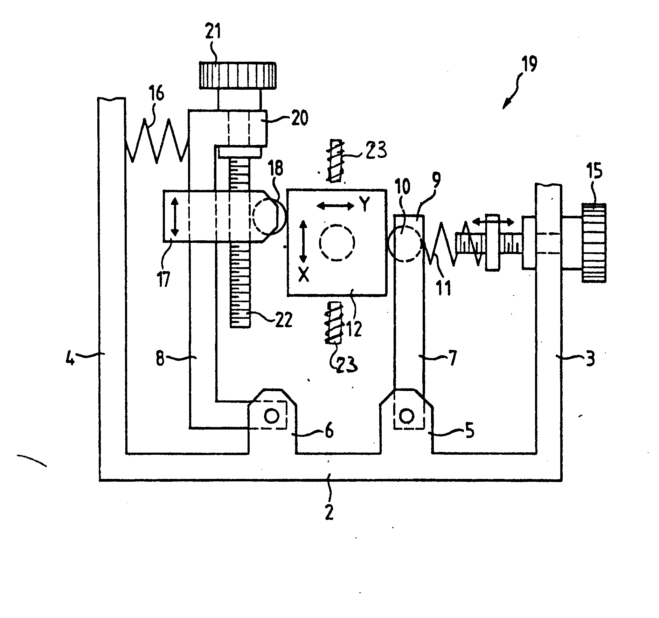

Die Erfindung wird nachfolgend beispielweise beschrieben,
wobei die Figur die Verstellung der Federcharakteristik
des Tasters für eine Maschinenachse zeigt.

Bei bekannten digitalen Kopiersteuerungen, wie sie an Kopierfräsmaschinen eingesetzt werden, wird der Sollwert der Auslenkung des Tasters als konstanter Wert festgelegt und bei allen Vorschubbewegungen eingehalten. Die Erfindung geht nun von der Ueberlegung aus, dass der fest eingestellte, konstante Sollwert der Tasterauslenkung zwar eine geeignete Lösung darstellt und auch im Normalfall zu einer brauchbaren Kopiergenauigkeit führt, jedoch bei verschiedenen Bearbeitungsoperationen nicht optimal ist. Bei der Fräsarbeit ist es nicht zu vermeiden, dass durch die Zerspanung an der Oberfläche des Werkstückes Reaktionen auf den Fräser entstehen, die eine elastische Verschiebung des Fräsers aus seiner Sollstellung zur Folge haben. Das ist vor allem bei Verwendung von dünnen, zylinder- und kegelförmigen Fräswerkzeugen der Fall, bei welchen die erwähnten Reaktionen das Werkzeug über das Sollmass hinaus ins Werkstück hineinziehen können. Die Erfindung sieht nun eine digitale Kopiereinrichtung mit einem einstellbaren Sollwert der Auslenkung vor. Damit ist es nun möglich, an kritischen Stellen des Werkstückes, d.h. an Stellen, an denen die auf den Fräser ausgeübten Reaktionen das Hineinziehen desselben bewirken könnten, den Sollwert der Fühlerauslenkung zu verkleinern, um Untermass am Werkstück zu vermeiden.

Aehnliche Verhältnisse liegen auch bei Werkstückpartien vor, deren Konturen nahezu parallel zur Kopiereinrichtung liegen und demzufolge ein grobes Oberflächenbild erhalten. In diesem Fall ist es ebenfalls vorteilhaft, mit einem kleineren Sollwert der Tasterauslenkung zu fräsen. Man erhält dadurch an dieser Stelle ein Aufmass, worauf in einem zweiten Bearbeitungsvorgang in dazu senkrechter Vorschubrichtung eine saubere Oberfläche
erzielt werden kann.

Die vorstehend beschriebene Beeinflussung der Fräsarbeit
durch Verändern des Sollwertes der Tasterauslenkung
stellt eine "individuelle", d.h. auf das Werkstück
ausgerichtete Anpassung einer Kopiersteuerung an die
jeweiligen Bearbeitungsoperationen dar. Diese Anpassung
kann noch weiter ausgebaut werden. Da die
Tasterauslenkung in den drei Achsen der Werkzeugmaschine
gemessen wird, ist es vorteilhaft, den Sollwert der
Tasterauslenkung in diesen Richtungen, d.h. radial und
axial, separat und unterschiedlich vorwählen zu können.
Durch diese Einstellmöglichkeit erhält man eine weitere
"individuelle" Anpassung der Tasterauslenkung an die
Werkstückkontur sowie eine separate Korrektur der
Tasterauslenkung in radialer und axialer Richtung, z.B.
um rückwirkende Einflüsse bei der Auslenkung des Tasters
zu korrigieren.

Die "individuelle" Anpassung der Tasterauslenkung an die
jeweilige Fräsarbeit kann noch dadurch erweitert werden,
dass der Bahnvorschub in Abhängigkeit von der
Bewegungsrichtung und der Drehrichtung des
Bearbeitungswerkzeuges, d.h. im Gegenlauf oder im
Gleichlauf, angepasst wird. Gegenüber bekannten
Kopiersystemen, die mit kostanter Vorschubgeschwindigkeit
über die Modellkontur fahren oder die Geschwindigkeit in
Funktion der Fräskraft oder der Fräsleistung regeln,
besteht hier der Vorteil, dass je nach Fräsart, d.h.
Gegenlauf oder Gleichlauf, aber auch beim Eintauchen in
das Werkstück oder beim Ausfahren aus demselben die
Vorschubgeschwindigkeit individuell den
frästechnologischen Bedingungen angepasst werden kann, wodurch eine weitere Steigerung der Produktivität möglich
ist.

Die vorstehenden Ausführungen gehen davon aus, dass die
Tasterauslenkung senkrecht zur Modelloberfläche erfolgt.
Infolge Reibungseinflüssen zwischen Taster und
Modelloberfläche und in der Tasterlagerung trifft diese
Annahme nur angenähert zu. Dieser Erscheinung kann
dadurch entgegengewirkt werden, dass der Taster zwar im
wesentlichen senkrecht zur Modelloberfläche ausgelenkt
wird, aber zusätzlich durch Stellelemente um einen
kleinen Betrag gegenüber seiner zentrierten Lage, d.h.
seinem Nullpunkt, in Bewegungsrichtung tangential zur
Modelloberfläche vorgesteuert wird. Mit dieser
Vorsteuerung können auch die bei grossen
Fräsgeschwindigkeiten an bekannten Kopiersystemen
auftretenden Kopierfehler an unstetigen Modellübergängen,
z.B. an flachen Innenecken, vermieden werden.

Die Anpassung der Vorschubgeschwindigkeit an die
jeweiligen Fräsverhältnisse kann noch dadurch ergänzt
werden, dass für jede Maschinenachse an der
Bedienungstafel der Kopiersteuerung Eingabestellen
vorgesehen werden, mit denen den programmierten
Vorschubbahnen an wählbaren Positionen weitere Funktionen
zugeordnet werden, z.B. das Wenden und/oder den Ausstoss
einer Zustellbewegung senkrecht zur abgefahrenen
Kopierfläche oder einen Vorschubstop oder ein
Programmende.

Weiter ist es zweckmässig, dass die Fräserbahnen beim
Zeilenkopieren automatisch so gelegt werden, dass ohne
Unterbruch des Fräsprozesses immer mit demselben Fräsereingriff, d.h. immer mit Gleichlauf oder immer im Gegenlauf, gearbeitet wird.

Aus den vorstehenden Ausführungen geht die Bedeutung des Tasters für eine Kopiersteuerung hervor. Bei bekannten Kopiersteuerungen ist der Taster mittels Federn zentriert, wobei durch die Federn ein für die Stabilität des Tasters ausreichender Anpressdruck vorhanden sein muss. Sind jedoch die Federn eines Tasters, wie dies bei bekannten Kopiersteuerungen der Fall ist, in den drei Auslenkrichtungen fest eingestellt, entsteht bei grossen Auslenkungen auch ein entsprechend grosser Tastdruck, der den Verschleiss des Modelles zusätzlich erhöht. Um diesen Nachteil zu vermeiden, wird bei der vorliegenden Kopiersteuerung ein Tastkopf verwendet, bei dem die Federsteifigkeit des Tasters verstellbar ist, siehe die Figur, die den Grundriss eines Tasters mit einer verstellbaren Federcharakteristik in der Y-Achse zeigt, während diejenige in der X-Achse in einer darunterliegenden Ebene liegt (nicht dargestellt). Die Verstellvorrichtung weist einen Rahmen 19 auf, der sich aus einem Steg 2 und Schenkeln 3, 4 zusammensetzt. Am Steg 2 sind zwei Lagersockel 5, 6 vorgesehen, in denen zwei Schwinghebel 7, 8 drehbar gelagert sind. Am freien Ende des Schwinghebels 7 ist eine Kugel 10 gelagert, die durch eine Feder 11 gegen einen Lagerkörper 12 gedrückt wird, in dessen Zentrum der Taster (nicht dargestellt) gelagert ist. Die Kraft der Feder 11 ist mittels eines Drehgriffes 15 einstellbar. Die für die zusätzliche Auslenkung vorgesehenen Stellelemente können Elektromagnete 23 (nur für X-Ebene dargestellt) oder ein Spindelantrieb, dessen Spindel über eine Feder auf den Taster bzw. den Lagerkörper 12 wirkt.

Zwischen dem Schenkel 4 und dem Schwinghebel 8 ist eine
Feder 16 angeordnet, die auf den Schwinghebel 8 und über
einen Schieber 17 mittels einer Kugel 18 auf den
Lagerkörper 12 drückt. Mit Hilfe des Drehgriffes 15 kann
die Einstellung des Nullpunktes vorgenommen werden.

Der Schwinghebel 8 weist an seinem freien Ende einen
abgekröpften Schenkel 20 auf. In diesem ist ein Drehgriff
21 mit einer Gewindespindel 22 gelagert. Auf der Spindel
22 ist der Schieber 17 geführt und kann durch Drehen des
Drehgriffes 21 bezüglich des Tasters verschoben werden.
Mit Hilfe der Drehgriffe 15, 21 kann die
Federcharakteristik dem jeweiligen Anwendungsfall
angepasst werden, wobei der Drehgriff 15 zusätzlich zur
mechanischen Nullpunkteinstellung benützt werden kann.
Für die Tasterverschiebung in X-Richtung ist die gleiche
Stellvorrichtung erforderlich.

Die Verstellung der Federcharakteristik in der Z-Achse
erfolgt in derselben Weise wie für die X- und Y-Richtung
mit dem Unterschied, dass der Rahmen senkrecht angeordnet
ist. Die mechanische Nullpunktstellung mittels des
Drehgriffes 15 ermöglicht die Verwendung von Tastern mit
sehr grossen Gewichtsunterschieden, ohne dass die
Uebereinstimmung des Kraft- und des Signalpunktes
verändert wird. Die relative Position zwischen Taster und
Fräser bleibt hierbei erhalten.

Zusammen mit den für die Einstellung der Tasterauslenkung
und für die Beeinflussung der Fräsoperation im Prozessor
programmierten Mittel und dem in seiner
Federcharakteristik verstellbaren Tastkopf kann die
Produktivität einer Kopierfräsmaschine mit digitaler

0214584

Kopiereinrichtung über das hinaus gesteigert werden, was ohne diese mit einer Kopiereinrichtung erreichbar ist.

Patentansprüche

1. Verfahren zur digitalen Steuerung einer Werkzeugmaschine, insbesondere Kopierfräsmaschine, bei welchem ein Modell mit einem Tastkopf abgetastet wird und die von diesem erzeugten Signale einem Prozessor übermittelt werden, durch welchen die Signale verarbeitet, verstärkt und zur Steuerung der Stellmotoren der Werkzeugmaschine eingesetzt werden und mit welchem ein dem Modell entsprechendes Werkstück hergestellt wird, wobei ein im Tastkopf mechanisch zentrierter Taster bei Berührung mit dem Modell im wesentlichen senkrecht zur Modelloberfläche um einen bestimmten Betrag ausgelenkt wird und hierbei die in den Richtungen der drei Maschinenachsen erzeugten, zur Auslenkung des Tasters proportionalen Signale dem Prozessor übermittelt werden sowie das Modell in vorgewählten Bahnen mit dieser Auslenkung als Sollwert abgefahren wird, dadurch gekennzeichnet, dass der Sollwert der Auslenkung des Tasters für den Vorschub auf vorgewählten Bahnen durch entsprechende Programmierung des Prozessors derart unterschiedlich eingestellt wird, dass dadurch die von der Fräserbeanspruchung herrührenden, bei der Bearbeitung entstehenden Abweichungen weitgehend kompensiert werden.

2. Verfahren nach Anspruch 1, dadurch gekennzeichnet, dass der Taster zusätzlich zur Auslenkung senkrecht zur Modelloberfläche um einen vorbestimmten Betrag gegenüber seiner zentrierten Lage in Bewegungsrichtung des Tastkopfes tangential vorgesteuert ausgelenkt wird.

3. Verfahren nach Anspruch 1 oder 2, dadurch gekennzeichnet, dass der Betrag des Sollwertes der Tasterauslenkung in radialer und axialer Fühlerrichtung getrennt eingestellt oder vorgewählt wird.

4. Verfahren nach einem der Ansprüche 1 bis 3, dadurch gekennzeichnet, dass der Betrag des Sollwertes der Tasterauslenkung in Abhängigkeit von der Bewegungsrichtung und der Tasterauslenkrichtung verändert wird.

5. Verfahren nach einem der Ansprüche 1 bis 3, dadurch gekennzeichnet, dass der Bahnvorschub des Fräsres in Abhängigkeit von der Bewegungsrichtung - einwärts oder auswärts - und der Drehrichtung - im Gegenlauf oder im Gleichlauf - des Bearbeitungswerkzeuges gewählt wird.

6. Verfahren nach einem der Ansprüche 1 bis 5, dadurch gekennzeichnet, dass die gewählten Vorschubbahnen beim Zeilenkopieren einen Bearbeitungsablauf erlauben, der ohne Unterbruch des Fräsprozesses immer mit demselben Fräsereingriff, d.h. immer im Gleichlauf oder im Gegenlauf, arbeitet.

7. Kopiereinrichtung zur Durchführung des Verfahrens nach einem der Ansprüche 1 bis 6, dadurch gekennzeichnet, dass der Tastkopf mit Mitteln zur unterschiedlichen Einstellung des Sollwertes der Tasterauslenkung und mit einer Einrichtung versehen ist, durch welche der Anpressdruck, mit welchem der Taster auf das Modell drückt, einstellbar ist.

8. Kopiereinrichtung nach Anspruch 7, dadurch gekennzeichnet, dass die Einrichtung zur Einstellung des Anpressdruckes am Tastkopf in X-, Y- und Z-Richtung je einen Rahmen (19) mit zwei durch einen Steg (2) verbundenen Schenkeln (3, 4) aufweist, wobei an den Schenkeln (3, 4) zwei entgegengesetzt wirkende Federn (11, 16) abgestützt sind, die auf Schwinghebel (7, 8) drücken, die einen, den Taster aufnehmenden Lagerkörper (12) abstützen, und wobei die Auflage (18) des Schwinghebels (8) am Lagerkörper (12) verschiebbar ist.

9. Kopiereinrichtung nach Anspruch 8, dadurch gekennzeichnet, dass von den Federn (11, 16) die eine Feder (11) manuell, z.B. durch einen mit einem Drehgriff (15) betätigbaren Spindeltrieb, in seiner Vorspannung einstellbar ist, wobei durch Aenderung der Vorspannung der Feder (11) der Kraftnullpunkt mit dem Signalnullpunkt in Uebereinstimmung bringbar ist.

10. Kopiereinrichtung nach einem der Ansprüche 7 bis 9, dadurch gekennzeichnet, dass für jede Maschinenachse Eingabemittel vorgesehen sind, mit denen an wählbaren Positionen eine Funktion, z.B. das Wenden und/oder der Ausstoss einer Zustellbewegung senkrecht zur abgefahrenen Bahnebene, ein Vorschubstop, ein Programmende o.dgl., programmierbar sind.